# EUROPEAN PATENT SPECIFICATION

(11) **EP 1 941 752 B1**
(45) Date of publication and mention of the grant of the patent: **22.09.2010**
(21) Application number: 06812239.9
(22) Date of filing: 26.10.2006
(51) Int. Cl.: H04L 12/58, H04W 84/08, H04L 29/06

(54) **System and method for forwarding presence subscription along with contact list entries**
System und verfahren zur Weiterleitung der Präsenzsubskription zusammen mit Kontaktlisteneinträgen
Système et procédé permettant de retransmettre une souscription de présence conjointement avec des inscriptions sur les listes de contacts

(30) Priority: 26.10.2005 IN CH15552005
(43) Date of publication of application: 09.07.2008
(73) Proprietor: Samsung Electronics Co., Ltd., Suwon-si Gyeonggi-do 443-742 (KR)
(72) Inventor: OH, Jae-Kwon, Seoul 137-886 (KR); PADMALAYAM NARAYANA, Kurup Ajith Kumar, Bangalore 560 068 (IN)
(74) Representative: Grünecker, Kinkeldey, Stockmair & Schwanhäusser Anwaltssozietät
(86) International application number: PCT/KR2006/004398
(87) International publication number: WO 2007/049928

(56) References cited:
- WO-A-03/003694
- US-A1- 2005 113 122
- US-B1- 6 366 771
- US-B1- 6 970 935
- ROSENBERG J ET AL: "AN XML FORMAT FOR PRESENCE BUDDY LISTS" INTERNET CITATION, [Online] XP002266630 Retrieved from the Internet: URL:http://www.watersprings.org/pub/id/dra ft-rosenberg-impp-buddylist-00.txt> [retrieved on 2004-01-12]
- OPEN MOBILE ALLIANCE: "Presence SIMPLE Architecture Document" OMA OPEN MOBILE ALLIANCE, [Online] 15 April 2005 (2005-04-15), pages 1-21, XP002534086 Retrieved from the Internet: URL:http://member.openmobilealliance.org/f tp/public_documents/pag/Permanent_document s/OMA-AD-Presence_SIMPLE-V1_0-20050415-C.z ip> [retrieved on 2006-06-24]
- WIFI_COWBOY, BOUSOZOKU: "Transfer iChat buddy list to a new account" MACRUMORS FORUM, [Online] 2 August 2004 (2004-08-02), XP002534087 Retrieved from the Internet: URL:http://forums.macrumors.com/showthread .php?t=82506> [retrieved on 2009-06-24]

## Description

### Technical Field

This invention generally relates to mobile communication technology. Further, this invention relates to Group and List Management Technology which is used for subscribing Presence and used for Group Communications in Push to talk Over Cellular, Instant Messaging, etc. More particularly, this invention relates to a system and a method for forwarding presence subscription along with contact list entries.

### Background Art

In the current OMA (Open Mobile Alliance) standardization specifications related to Group Management, Contact Lists are used for storing the contact entries in Group and List Management Servers. Contact entries are identities for specific users, by which a user can communicate with other users. Contact Lists are lists of contact entries that represent such identities of other users. Further, Group Lists are used for defining groups for group communication, and include lists of contact entries grouped together to perform group communication. Contact List and Group Lists have their own attribute sets that define the properties of the contact lists and group lists. Contact Lists are used for subscribing the Presence information of other users and initiating communication with them. Group Lists are used for initiating group communications like Push to talk Over Cellular, Instant Messaging, etc.

A user can subscribe the presence information of other users by a sending subscription request to other users with the help of the contact list entries of other users described in the contact list. Here, Presence Information refers to an collection of information available for communication with a user, such as device availability, user status, location, client device capabilities and searchable personal attributes. Alias names can be added for the contact list entries. Currently, in order to subscribe presence information of other users, the user has to send individual request for subscribing the presence information to other users by using identities (e.g., SIP addresses) of other users described in his/her contact list. When a user wants to subscribe large number of presence attributes, he/she has to include all the required attributes while sending the presence subscription request.

If a user wants to create a Group Lists which is already existing in the GLMS for another user, he/she need note down the identities of the Group Lists entries of that group for the corresponding user to some media and add the entries to the created group one by one manually.

**Steps of Related Art**

User A adds the entries of other users in his Contact List and Group List manually. User A subscribes for the presence information of other users, by selecting the required presence attributes he/she is interested to subscribe, with the help of the entries from his contact list. User A can place presence subscription request for each user one by on e or he/she can send a presence subscription request for a number of end users by a single subscription. User A can initiate a group communication (PoC/Instant Messaging) using the entries in his Group List. User can add the alias names for the entries that are added to his contact list.

**Operation of Related Art**

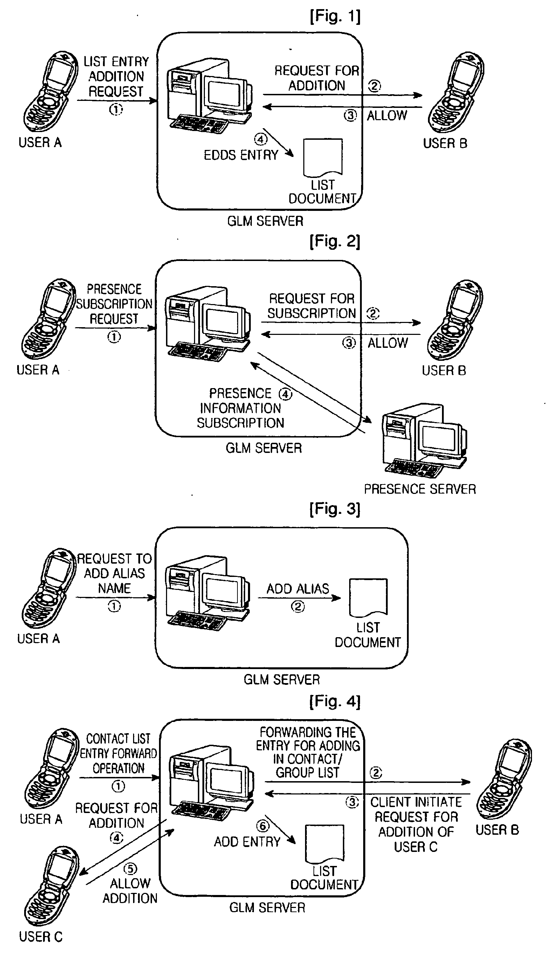

The related art operation can be understood from Figure 1, Figure 2 and Figure 3. Figure 1 describes the present scenario for Group/Contact List Entry addition. The step of execution is as follows:

1. Suppose user A wants to add user B in the Group/Contact list, the user A will initially send a List/Group Entry Addition Request to the user B.

2. The GLM server sends the request for addition to user B.

3. User B then respond with an allow signal to the GLM server if the request is taken positively.

4. GLM server then adds the entry for the user B into the List /Group Document.

Figure 2 describes the current presence subscription mechanism. The step of execution is as follows.

1. User A sends a Presence Subscription Request to the GLM server.

2. The GLM server sends the request for subscription to user B.

3. User B then respond with an allow signal to the GLM server if the request is taken positively.

4. User A subscribes for the presence information of other users, by selecting the required presence attributes with the help of a presence server.

Figure 3 describes the present mechanism for adding alias names. The step of execution is as follows.

1. User A sends a request to add Alias Name.

2. GLM server adds the alias name to the contact list.

1) Request for Adding Users in Contact List:

User A sends a request to the Server for adding User B in his contact

list.

2) Server adds the entry to the Contact List:

The Server forwards the request to User B for addition of User B as an entry in User A's contact list. If User B accepts addition, the Server adds the entry for User B in User A's contact list.

3) Request for Creation of Group List:

User A sends a request to the Server for adding an entry in his Group List.

4) Server adds the Entry in the Group List:

The Server adds the entry in the Group List of User A.

5) Subscription of Presence:

User A sends a request to the server for subscribing the respective presence information of a selected number of users that are added to his contact list entry. The Server forwards the subscription request to individual users and presence subscription is granted for those users accepting the subscription request.

6) Adding Alias Names:

User A send a request to the server for adding an alias name for User B and the alias name is added corresponding to that entry

WO 03/003694 A discloses a method for detecting and transporting dynamic presence information over a wireless and wireline communications network comprises determining client device capabilities relating to user presence information that may be obtained from the client device and determining a presence configuration of the client device. The presence configuration defines information to be provided to a presence agent. The presence configuration also defines one or more action to be performed upon notification of an event occurrence. The method also includes collecting dynamic presence information based at least in part on the client device capabilities and the presence configuration

### Disclosure of Invention

### Technical Problem

The limitations of the existing art may be summarized as follows:

Contact List and Group Lists need to be created manually and addition of individual entries to these lists needs to be added one by one manually.

2. When the number of entries in the contact list or group list is large, manual addition is time consuming and difficult.

3. Presence information of the users in the contact list entries need to be subscribed manually.

4. When the number of presence attributes are large, manual subscription is time consuming and difficult.

5. Alias names need to be added manually

### Technical Solution

The object of this invention is to provide a system and method for forwarding the Group/Contact List entries, Presence information attributes subscribed for those entries and the alias names for the entries which is part of one user's contact list to another user.

In this invention, by forwarding the contact list/group list entries with their presence subscription and alias names, the user who receives the forwarded lists, subscriptions and aliases need not add the entries to the contact and group lists manually, need not manually subscribe for the presence information for those attributes already subscribed by the user who sends the entries, and need not add the alias names for the entries in the contact list. This reduces the time for addition of entries and aliases and easy for the subscription of the presence information.

To accomplish this object, in accordance with an aspect of this invention, there is provided a method for forwarding presence subscription along with contact list entries, the method including the steps of: (a) receiving a request for forwarding the contact list entries by a server; (b) presetting IDs of other users as a preset value list by each user for which said user is interested to accept forwarded documents, alias names and presence subscriptions; and (c) checking the preset value list by the server while performing a forward operation; wherein if a sending user's ID is in the preset value list, the server puts said contact list documents in a recipient user's tree.

In accordance with another aspect of this invention, there is provided a system for forwarding presence subscription along with contact list entries, the system including: (a) means for receiving a request for forwarding the contact list entries by a server; (b) means for presetting IDs of other users as a preset value list by each user for which said user is interested to accept forwarded documents, alias names and presence subscriptions; and (c) means for checking the preset value list by the server while performing a forward operation; wherein if a sending user's ID is in the preset value list, the server puts said contact list documents in a recipient user's tree.

### Advantageous Effects

According to this invention, by forwarding contact list entries, they need not be added manually one by one. This reduces the time required for adding contact list/ group list entries, subscribing presence and adding alias names. Further, error in adding the entries for the contact list/group list can be prevented by referring them from another contact list. Furthermore, manual subscription of presence information for one or more number of presence attributes can be avoided, and the alias names of the entries need not be added manually one by one.

### Brief Description of the Drawings

Figure 1 illustrates Group/Contact List Entry Addition.

Figure 2 illustrates Presence Subscription.

Figure 3 illustrates Adding Alias Name.

Figure 4 illustrates Forwarding Contact List/Group List Entries.

Figure 5 illustrates Forwarding Contact List/Group List Entries and Performing Presence Subscription.

Figure 6 illustrates Forwarding Contact List/Group List Entries and Adding Alias Name.

Figure 7 illustrates Implicitly Adding Contact List/Group List Entries and Performing Presence Subscription thereof.

### Best Mode for Carrying Out the Invention

The invention is carried out by the method of independent claim 1 and by the apparatus of independent claim 8.

A first user can forward contact list and group list entries, alias names corresponding to each entry and presence information subscribed for these entries to another user. If a second user who receives them accepts adding the entries in his/her contact list and group list, a second user's client sends individual addition requests to each entry in the forwarded contact list to a server if applicable, and the server adds the entries to the second user's contact and group lists upon receiving the acceptance for addition of entries. If the second user accepts presence subscription of the entries in the contact list, the second user's client sends individual requests for subscribing the presence information that are already subscribed by the first user, for all the entries in the contact list for which the first user has presence subscription. When the contact list is forwarded, if the second user is interested to add the alias names that are added to the entries by the first user, the second user's client will send individual requests to the server for adding the alias names corresponding to the forwarded contact list entries. The forwarding of the contact list/group list entries, corresponding presence subscription and the alias names is done using a single transaction.

This invention proposes a system and a method as described below.

Herein, there is proposed a system for forwarding presence subscription along with contact list entries wherein for a contact list addition, said system including:

(a) a GLM server which forwards an entry for adding in contact/group lists and adds the entry into list/group documents;

(b) a first user which initiates a contact list entry forward operation for adding the entry into a second user's list;

(c) a second user's client which sends individual addition requests to each entry in the forwarded contact list; and

(d) the second user which sends an allow signal in repsonse to d to the GLM server if the request is taken positively.

Herein, there is further proposed a system for forwarding presence subscription along with contact list entries wherein said system including:

(a) a first user which performs a contact list entry forward operation with presence subscription or addition of alias;

(b) a GLM server which implicitly places requests for adding the entries, aliases and subscribing for presence information on the assumption that a second user accepts the request, performs presence information aquisition, and sends a notification for the forward operation to the second user;

(c) the second user which sends an allow signal in response to the request to the GLM server if the request is taken positively; and

(d) a presence server which is used for subscribing for the presence information of other users by selecting required presence attributes.

Herein, there is proposed a method for forwarding presence subscription along with contact list entries wherein for a contact list addition, said method including the steps of:

(a) forwarding an entry for adding in contact/group lists by a GLM server;

(b) initiating a contact list entry forward operation for adding the entry into a second user's list by a first user;

(c) sending individual addition requests to each entry in the forwarded contact list by a second user's client;

(d) sending an allow signal in response to the request to the GLM server if the request is taken positively by the second user; and

(e) adding the entry into list /group documents by the GLM server.

Herein, there is further proposed a method for forwarding presence subscription along with contact list entries wherein said method including the steps of:

(a) performing a contact list entry forward operation with presence subscription and addition of alias by a first user;

(b) placing requests implicitly for adding the entries, aliases and subscribing for presence information by a GLM server;

(c) sending an allow signal to the GLM server if the request is taken positively by a second user;

(d) acquring the presence information by the GLM server;

(e) sending a notification for the forward operation to the second user by the GLM server; and

(f) subscribing for the presence information of other users by selecting required pr esence attributes using a presence server.

Accordingly, this invention further describes a method for forwarding presence subscription along with contact list entries, the method including the steps of:

(a) receiving a request for forwarding the contact list entries by a server;

(b) presetting IDs of other users as a preset value list by each user for which said user is interested to accept forwarded documents, alias names and presence subscriptions; and

(c) checking the preset value list by the server while performing a forward operation;

wherein if a sending user's ID is in the preset value list, the server recognizes this as prior acceptance from a recipient user, and puts the contact list documents in the recipient user's tree.

Presetting the IDs of the users can be done using the XML document management where using a XDM Client, the user sends an XCAP PUT request to the XDM Server for modifying the access policy XML document to add the IDs of the other users to the access list. The XCAP PUT is identified for modifying any XML documents stored on XDM Servers and upon modifying the document as requested, the XDM Server sends a response back to the XDM Client.

Accordingly, this invention further describes a system for forwarding presence subscription along with contact list entries, the system including:

(a) means for receiving a request for forwarding the contact list entries by a server,

(b) means for presetting IDs of other users as a preset value list by each user for which said user is interested to accept forwarded documents, alias names and presence subscriptions; and

(c) means for checking the preset value lsit by the server while performing a forward operation;

wherein if a sending user's ID is in the preset value list, the server recognizes this as prior acceptance from a recipient user, and puts said contact list documents in the recipient user's tree.

In the method for forwarding presence subscription along with contact list entries, as proposed herein, revised contact lists that are modified from the original documents for the purpose of forwarding and presence subscription for them can be forwarded to multiple users without affecting the original contact lists. This can be achieved as follows:

A user selects a number of entries from his contact list/group list for forwarding. He/She performs some operations on the contact list/group list entries to modify the properties of the group (for example; he/she removes some entries from the contact list/group list) and forwards the modified contact list/group list to other users. In this case, he/she forwards a contact list/group list modified from the existing lists in his/her service tree.

Father, this invention proposes an alternate method for forwarding presence subscription along with contact list entries, in which contact lists stored on a client device are forwarded to recipients after modification. This alternate method is for forwarding the contact lists stored directly on the client device to one or more of the recipients using a single transaction. Here, contact list entries to be forwarded can be dynamically modified and forwarded without affecting the original contact lists stored on the client device. UI support will be provided for modifying the contact list document. The user selects an XML document stored on a cache of the client device, modifies desired entries and initiates a forward operation by using the UI provided. Forwarding the contact list can be achieved by an HTTP XCAP PUT request with the content of the contact list as a body. That is, the XDM client generates an HTTP XCAP PUT request to the XDM server with the content of the contact list XML document as a body, and sends the request to the XDM server. The XDM server notifies the recipient user(s) of receiving the forward request and, if the recipient users accept the forwarded contact list, the XDM server creates separate XML documents corresponding thereto and stores the created XML documents in such a manner that the recipient users become the owner of the documents. Upon creating the XML documents, the XDM server sends the URIs of the documents to the recipient user(s).

The other objects, features and advantages of the present invention will become more apparent from the ensuing detailed description taken in conjunction with the accompanying drawings.

Preferred embodiments of the present invention will now be explained with reference to the accompanying drawings. It should be understood however that the disclosed embodiments are merely exemplary of the invention, which may be embodied in various forms. The following description and drawings are not to be construed as limiting the invention and numerous specific details are described to provide a thorough understanding of the present invention, as the basis for the claims and as a basis for teaching one skilled in the art how to make and/or use the invention. However in certain instances, well-known or conventional details are not described in order not to unnecessarily obscure the present invention in detail.

The proposed system can be realized in the following ways:

1. Contact lists, group lists, presence subscription for entries in the contact list and alias names for the entries in the contact list of one user are forwarded to another user so that a second user who receives them is prompted for adding each entry if the entries are not already available in the second user's contact list, the presence subscription and alias names corresponding to those entries into the second user's contact list. If the second user selects addition of entries and alias name and subscription of presence information for those entries forwarded, the second user's client sends individual requests to the server for adding the forwarded contact list/group list entries and their alias names into his/her contact list/group list and sends individual presence subscription request for each entry in the forwarded contact list.

2. While forwarding the contact list/group list entries, alias names for the entries and their presence subscription, the server assumes that the second user is interested in newly adding new members that are present in the forwarded contact list but is currently not present in his contact list, the entries for which he/she does not have the presence subscription and their alias names and he/she is interested for the presence subscription. Thus, the server places requests for adding all the forwarded entries that are currently not present in the second user's contact list, their aliases and subscribing for the presence information for the entries.

**Operation of the Invention**

A first user selects a number of entries from his contact list/group list and forwards them to another user by specifying whether he wants to forward the alias names and presence subscription for these entries. A server sends a message to a second user to thereby inquire if he/she is interested in adding the forwarded contact list/group list entries and their alias names into the second user's own list and he/she is interested in subscribing the presence information for these entries that are already subscribed by the first user. The second user determines whether to accept the addition and the presence subscription, the second user's client sends individual requests to the server to add the forwarded entries into the second user's contact list/group list when the acceptance is given, and the server performs the required task. The second user's client then sends individual requests to add the alias names for these entries and server adds the alias names corresponding to each entries. The second user's client sends individual presence subscription requests to all the users in the forwarded contact list for the presence attributes that are subscribed by the first user and server performs the operations for presence subscription.

A recipient user can add URIs identifying sending users, which are interested in getting forwarded contact lists and presence subscription from them, into his/her user accept list or user reject list. This service can be considered as "ListForward". Forward operations done by users described in the entries in the user accept list of the recipient user only will be forwarded to the recipient user.

Figure 4 describes the way of adding the contact list and group list. The steps of execution are as follows:

1. User A initiates the contact list entry forward operation.

2. GLM server forwards the entry for adding in the contact/group list.

3. Client User B initiates the request for addition of User C.

4. GLM server sends the request for addition to User C.

5. User C then responds with an allow signal to the GLM server if the request is taken positively.

6. GLM server then adds the corresponding entry of User C into the list/group document.

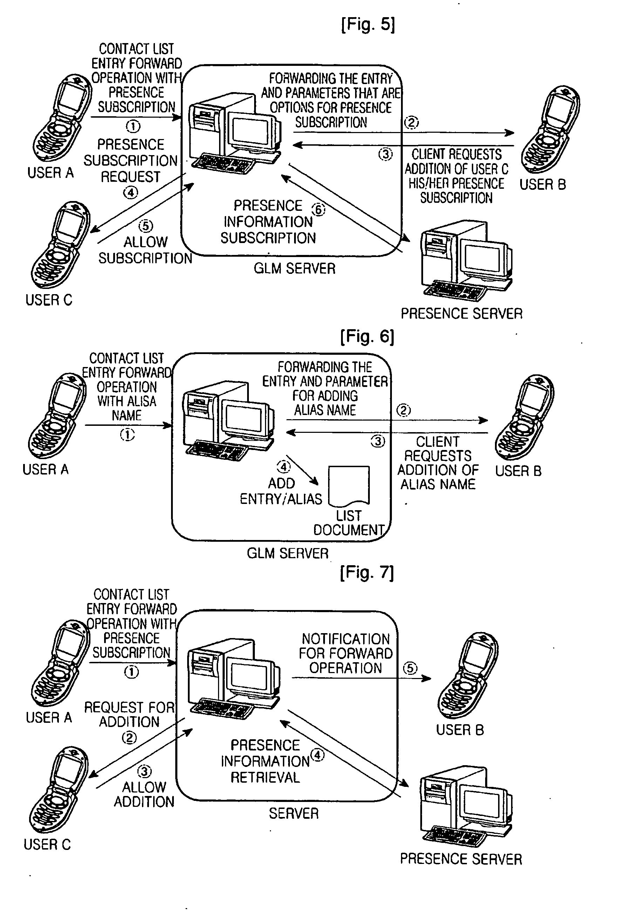

Figure 5 describes the way of subscribing the presence information of the forwarded contact list entries as per this invention. The steps of execution are as follows:

1. User A initiates the contact list entry forward operation with the presence subscription.

2. GLM server forwards the entry and parameters that are options for the presence subscription to User B.

3. Client B requests addition of User C in his/her presence subscription.

4. GLM server sends the presence subscription request to User C.

5. User C then responds with an allow signal to the GLM server if the request is taken positively.

6. User A subscribes for the presence information of other users by selecting the required presence attributes with the help of a presence server.

Figure 6 describes the way of adding the alias names for the entries added by the forward operation. The steps of execution are as follows:

1. User A initiates the contact list entry forward operation with the alias name.

2. GLM server forwards the entry and parameter for adding the alias name to User B.

3. Client B requests addition of the alias name to the GLM server.

4. GLM server adds the entry/alias in the list.

Figure 7 describes the way of adding the alias names and the subscription of the presence information for the forwarded entries. This is an operation which doesn't need the transaction of the second user. The steps of execution are as follows:

1. User A initiates the contact list entry forward operation with the presence subscription.

2. GLM server confirms that User A exists in User B's accept list, and assumes that User B accepts the forwarded contact list entries and the presence subscription for them. Thus, GLM server places requests for adding the forwarded entries and the alia ses for them and subscribing for the presence information of User C to User C.

3. User C then responds with an allow signal to the GLM server if the request is taken positively.

4. GLM server performs presence information acquisition with the help of a presence server.

5. GLM server sends the notification for the forward operation to User B, that is, notifies User B that the entries and the alias name of User C are added into the contact list and the presence subscription for them is done.

The following are the illustrations of the methods to realize this system.

A. An exmaple of a new transaction for the forward group operation can be illustrated as presented below in Table 1.

**Table 1**

| |
|---|
| ***User Ajith forwards the POC group to User Venki:*** GET |
| http://xdms.operator.com/script?**action**=**forward**_**group**&ownei=sip%3Ajith@Sams |
| ung.com&group_uri=sip%3Ajith%n40poc345.Samsung.com&**recipient**= |
| sip%3Venki@Samsung.com HTTP/1.1Authorization: Digest username="ajith", |
| realm="xdms.samsung.com",nonce="dcd98b7102dd2f0e8b11d0f600btb0c093", |

The group forward operation is notified to the recipient user only if the sender's identity is in the user accept list of the recipient. Otherwise, the server will return "403 Forbidden" to the sender. This authentication is general for all the operations related to the group/list forward operations.

If the recipient user accepts the forwarded group, it returns HTTP/1.1 200 OK.

The XDM server creates a copy of the document, renames and stores it, and sends a notification for the URI of the same to the recipient XDM Client. Here, the notificatin sent to the recipient XDM Client can be illustrated as presented below in Table 2.

**Table 2**

| |
|---|
| Content-Type: application/group+xml;charset=UTF-8<?xml version=" 1.0" |
| encoding="UTF-8" ?><group uri="sip%3Venki%40poc345.Samsung.com" |
| max_participants="20"/> |

Another example of a new transaction for the forward group operation can be illustrated as presented below in Table 3.

**Table 3**

| |
|---|
| ***User Ajith Gets the Document:*** |
| GEThttp://xcap.example.com/services/resource-lists/users/sip:Ajith@Samsung.com/fr iends.xml HTTP/1.1Content-Length: 0*Server returns the Document in the body of the 200 OK response.* HTTP/1.1 200 OKEtag: |
| "ababab"Content-Type:application/resource-lists+xmlContent-Length: 327<?xml version=" 1.0" encoding="UTF-8"?><resource-lists |
| xmlns="urn:ietf:params:xml:ns:resource-lists"> <list name="My_friends> <entry uri="sip:friendl @example.com"> <display-name>Friend1<ldisplay-name> </entry> <entry uri="sip:friend2@example.com"> <display-name>Friend2</display-name> < / entry></list></resource-lists> ***User Ajith Puts the Document in User Venki's*** |
| ***Service Tree:*** |
| PUThttp://xcap.example.com/services/resource-lists/users/sip:Venki@Samsung.com/f riends.xml HTTP/1.1 Content-Type: applicationlresource-lists+xmlContent- Length: |
| 247<?xml version=" 1.0" encoding="UTF-8"?><resource-lists |
| xmlns="urn:ietf:params:xml:ns:resource-lists"> <list name="My friends"> <entry |
| uri="sip:friend1@example.com"> <display-name>Friend1</display-name> </entry> </list></resource-lists> |

When the server receives the PUT request, it identifies that the SIP URI of the user provided in the request is not that of the sending user. Server sends a message to the recipient user (Venki) so that the recipient user can accept or reject the document. If the recipient accepts the document, the Server puts the document in the recipient user service tree and sends the SIP URI of the new document to the recipient user.

B. An example of a new transaction for the forward URI List operation can be illustrated as presented below in Table 4.

**Table 4**

| |
|---|
| GEThttp://xdms.operator.com/script?**action=forward_urilist**&ownei=sip%3Ajith @ S |
| amsung.com&group_uri=sip%3Ajith%friendlist.Samsung.com&**recipient**= |
| sip%3Venki@Samsung.com& **forward presencesubscription** =Confirm HTTP/ |
| 1.1Authorization: Digest username="ajith", |
| realm="xdms.samsung.com",nonce="dcd98b7102dd2f0e8b11d0f600bfb0c093", |

In Table 4, the "forward_presencesubscription=Confirm" implies that the server needs to confirm from the recipient user for the subscription of the presence information of the entries in the forwarded list.

The XDM server, upon receiving a request for forward operation, authenticates the user. If the user is authorized to perform the forward operation, the server sends a notification to the recipient user. If the recipient user is willing to accept the forwarded TRI list and presence subscription, it returns an HTTP /1.1,200 OK back to the XDM server. The server then creates a copy of the XML document corresponding to the URI List and renames the same in such a way that the recipient user becomes the owner for that list document. Upon renaming, the server sends the URI for the newly created document to the recipient user. The server sends a HTTP /1.1, 200 OK response back to the sending user for the completion of the operation. The recipient XDM client sends individual presence subscription request (SUBSCRIBE) for the entries in the URI List.

An implicit presence subscription operation as "forward_presencesubscription = Yes" implies that the recipient user is willing to subscribe the presence information of the entries in the forwarded list. Here, the sent presence subscription request can be illustrated as presented below in Table 5.

**Table 5**

| |
|---|
| GET http://xdms.operator.com/script?**action**=**forward_urilist&** |
| owner=sip%3Ajith@Samsung.com&group_uri=sip%3Ajith%40friendlist.Samsung.co |
| m&**recipient**= sip%3Venid@Samsung.com& **forward presencesubscription** =Yes |
| HTTP/1.1Authorization: Digest username="ajith", |
| realm="xdms.samsung.com",nonce="dcd98b7102dd2f0e8b11d0f600bfb0c093", |

In this case, server assumes that the recipient user is ready to accept the list and interested for presence subscription of the users in the list. The server implicitly sends subscription requests to individual users.

The system can be realized in a new novel way as per the invention.

Each user preset the IDs of other users from which they are interested to accept the forwarded documents, alias names and presence subscriptions. While performing the forward operation, the Server checks the preset value and if the sending user's ID is there in the preset value list, then the Server puts the document in the recipient user's tree.

Presetting the IDs of the users can be done using the XML document management as follows:

Using the XDM Client, the user will send an XCAP PUT request to the XDM Server for modifying the access policy XML document so that the IDs of the other users can be added to the access list. XCAP PUT method is identified for modifying any XML documents stored on XDM Servers. Upon modifying the document, the XDM Server will send a 200 OK response back to the XDM Client.

If the request for forwarding the contact list entries comes to the server, it retrieves the access policy XML document and checks whether the forwarding user is allowed to perform the forward operation for the other user. If the forwarding user's ID is present in the preset value list, the Server will forward the contact list document to the recipient user.

Requirements:

1. The user shall have the mechanism in his/her client to select a number of entries from the contact list/ group list for forwarding to other users.

2. The user shall have the mechanism in his/her client to specify whether the user is interested to forward the presence subscription and alias names for each of the entries he/she is forwarding to the other user.

3. The server shall have the mechanism to notify the second user that the first user has forwarded a list and associated alias names and presence subscription for the second user.

4. The second user shall have the mechanism in his client to wholly or selectively accept or reject the forwarded list and associated alias names and presence subscription.

5. The second user shall have the mechanism in his client to select only addition of entries, addition of alias names, subscription of presence information and various combinations of these.

6. The second user's client shall have the mechanism to send individual requests for addition of entries, alias names and presence subscription for them.

7. The server shall have a mechanism to recognize from the forwarded list which members are currently not present in the users contact list and request the above procedure only for those entries.

8. The recipient client shall have a mechanism to recognize from the forwarded list which members are currently not present in the users contact list and request the above procedure only for those entries.

9. The recipient client shall have a mechanism to add entries in his accept/reject lists so as to control the forward operation by allowing the senders that are already available in the accept list.

The present invention is advantageous in the following respects:

1. By forwarding the contact list entries, it is possible to prevent adding them manually one by one.

2. Reduces the time required for adding the contact list/group list entries, subscribing the presence and adding alias names.

3. Avoids error in adding the entries for the contact list/group list by referring them from another contact list.

4. Avoids manual subscription of presence information for one or more number of presence attributes.

5. Avoids adding the alias names of the entries manually one by one.

As an alternative, the server assumes that when a user forwards the contact list/ group list entries to another user, the second use is always ready for accepting the contact list/group list entries, the alias names and the presence subscription for those entries. So the server will not send message to the second user and wait for this response to add the entries. The server implicitly sends individual request to all the users in the entries for addition of them in the second users contact list and adds those entries that are allowed by other users to the contact list/group list of the second user. The server adds the alias names for the entries and sends presence subscription request on behalf of the second user to those entries that are already subscribed by the first user.

## Claims

1. A method for forwarding presence subscription along with contact list entries by a server, the method comprising the steps of:
a) presetting IDs of other users as a preset value list by each user for which a recipient user is interested to accept at least one of alias names and presence subscriptions of the other users;
b) receiving a request for forwarding contact list entries from a sending user; and
c) checking the preset value list while performing a forward operation;
wherein if the sending user's ID is in the preset value list, the server forwards said contact list entries to the recipient user.

2. The method as claimed in claim 1, wherein the step of presetting the IDs of the other users is done using XML document management and wherein the method further comprises the step of sending an XCAP PUT request from the sending user to an XDM Server for codifying an access policy XML document to add the IDs of other users to an access list to the XDM server by using an XDM client.

3. The method as claimed in claim 2. wherein the XCAP PUT is identified for modifying any XML documents stored on the XDM servers and the method further comprises
the step of, upon modifying the document, sending a response back to the XDM Client by the XDM server.

4. The method as claimed in claim 1, further comprising the step of forwarding a revised contact list/group list, which is modified during the forwarding, to other users by the sending user.

5. The method as claimed in claim 1, wherein the step of receiving a request for forwarding contact list entries further comprises the step of receiving a request for forwarding group list entries of a user, which are stored in either the server or a client, along with their attributes including alias names and presence subscription to other users by the user.

6. The method as claimed in claim 5, wherein if a sending user's ID is in the preset value list, the server adds the contact list/group list entries and their attributes including the alias names and the presence subscription into the recipient user's contact list and perform the presence subscription on behalf of the recipient user, and sends a notification for a result thereof to the user.

7. The method as claimed in claim 6, further comprising the step of, when the server adds the forwarded contact list entries, sending a request for allowing addition of the entries to the users corresponding to the entries to be added, receiving a response thereto and adding the entries.

8. A server for forwarding presence subscription along with contact list entries, the server comprising:
a) means for receiving a request for forwarding the contact list entries from a sending user;
b) means for presetting IDs of other users as a preset value list by each user for which a recipient user is interested to accept at least one of alias names and presence subscriptions of the other users; and
c) means for checking the preset value list while performing a forward operation;
d) means for forwarding said contact list entries to the recipient user if the sending user's 10 is in the preset value list.

9. The server as claimed in claim 8, wherein presetting the IDs of the users is done using XML document management and, using an XDM client, the user sends an XCAP PUT request to an XDM Server for modifying an access policy XML document to add the IDs of other users to an access list to the XDM server.

10. The server as claimed in claim 9, wherein the XCAP PUT is identified for modifying any XML documents stored on the XDM servers and upon modifying the document, the XDM server sends a response back to the XDM Client.

11. The server as claimed in claim 8, wherein means for receiving a request for forwarding the contact list entries from a sending user receives a request for forwarding group list entries and their attributes including the alias names and the presence subscription into the recipient user's contact list and perform the presence subscription to other users by the user.

12. The server as claimed in claim 11, wherein the means for adding the contact list/group list entries and their attributes including the alias names and the presence subscription into the recipient users contact list performs the presence subscription on behalf of the recipient user; and sends a notification for a result thereof to the user.

## Patentansprüche

1. Ein Verfahren zum Weiterleiten einer Präsenzsubskription zusammen mit Kontaktlisteneinträgen durch einen Server, wobei das Verfahren die Schritte umfasst:
a) Voreinstellen von IDs anderer Nutzer als eine voreingestellte Werteliste durch jeden Nutzer, für den ein Empfangsnutzer Interesse dafür besitzt, zumindest eines von Aliasnamen und Präsenzsubskriptionen der anderen Nutzer zu akzeptieren;
b) Empfangen einer Anfrage zum Weiterleiten von Kontaktlisteneinträgen von einem sendenden Nutzer; und
c) Überprüfen der voreingestellten Werteliste während des Ausführens einer Weiterleitungsaktion;
wobei der Server die genannten Kontaktlisteneinträgen an den empfangenden Nutzer weiterleitet, wenn sich die ID des sendenden Nutzers in der voreingestellten Werteliste befindet.

2. Das Verfahren, wie es in Anspruch 1 beansprucht wird, in dem der Schritt des Voreinstellen der IDs der anderen Nutzer unter Verwendung eines XML-Dokumenten-Managements ausgeführt wird, und in dem das Verfahren weiterhin den Schritt des Sendens einer XCAP - PUT - Anforderung von dem sendenden Nutzer an einen XDM - Server zum Modifizieren eines Access - Policy - XML - Dokuments, um die IDs anderer Nutzer zu einer Zugriffsliste zu dem XDM - Server unter Verwendung eines XDM - Clients hinzuzufügen, umfasst.

3. Das Verfahren, wie es in Anspruch 2 beansprucht wird, in dem der XCAP - PUT zum Modifizieren jeglicher XML - Dokumente identifiziert wird, die auf den XDM - Servern gespeichert sind, und wobei das Verfahren weiterhin nach dem Modifizieren des Dokuments den Schritt des Sendens einer Antwort durch den SDM - Server an den XDM - Client zurück umfasst.

4. Das Verfahren, wie es in Anspruch 1 beansprucht wird, das weiterhin den Schritt des Weiterleitens einer revidierten Kontaktliste / Gruppenliste, die während des Weiterleitens modifiziert wird, durch den sendenden Nutzer an andere Nutzer umfasst.

5. Das Verfahren, wie es in Anspruch 1 beansprucht wird, in dem der Schritt des Empfangens einer Anforderung zum Weiterleiten von Kontaktlisteneinträgen weiterhin den Schritt des Empfangens einer Anforderung zum Weiterleiten von Guppenlisteneinträgen eines Nutzers, die entweder auf dem Server oder dem Client gespeichert sind, zusammen mit ihren Attributen, die Aliasnamen und eine Präsenzsubskription enthalten, an andere Nutzer durch den Nutzer umfasst.

6. Das Verfahren, wie es in Anspruch 5 beansprucht wird, in dem, wenn sich die ID des sendenden Nutzers in der voreingestellten Werteliste befindet, der Server die Kontaktlisten- / Gruppenlisteneinträge und deren Attribute, die die Aliasnamen und die Präsenzsubskription enthalten, der Kontaktliste des empfangenden Nutzers hinzufügt und anstelle des empfangenden Nutzers die Präsenzsubskription ausführt und eine Nachricht über ein Ergebnis derselben an den Nutzer sendet.

7. Das Verfahren, wie es in Anspruch 6 beansprucht wird, das weiterhin den Schritt des Sendens einer Anforderung einer Erlaubnis zum Hinzufügen der Einträge an die Nutzer entsprechend den hinzuzufügenden Einträgen, des Empfangens einer Antwort darauf und des Hinzufügens der Einträge, wenn der Server die weitergeleiteten Kontaktlisteneinträge hinzufügt, umfasst.

8. Ein Server zum Weiterleiten einer Präsenzsubskription zusammen mit Kontaktlisteneinträgen, wobei der Server umfasst:
a) eine Einrichtung zum Empfangen einer Anfrage zum Weiterleiten von Kontaktlisteneinträgen von einem sendenden Nutzer;
b) eine Einrichtung zum Voreinstellen von IDs anderer Nutzer als eine voreingestellte Werteliste durch jeden Nutzer, für den ein Empfangsnutzer Interesse dafür besitzt, zumindest eines von Aliasnamen und Präsenzsubskriptionen der anderen Nutzer zu akzeptieren; und
c) eine Einrichtung zum Überprüfen der voreingestellten Werteliste während des Ausführens einer Weiterleitungsaktion;
d) eine Einrichtung zum Weiterleiten der genannten Kontaktlisteneinträgen an den empfangenden Nutzer, wenn sich die ID des sendenden Nutzers in der voreingestellten Werteliste befindet.

9. Der Server, wie er in Anspruch 8 beansprucht wird, in dem das Voreinstellen der IDs der Nutzer unter Verwendung eines XML-Dokumenten-Managements ausgeführt wird, und in dem der Nutzer unter Verwendung eines XDM - Clients eine XCAP - PUT - Anforderung an einen XDM - Server zum Modifizieren eines Access - Policy - XML - Dokuments sendet, um die IDs anderer Nutzer zu einer Zugriffsliste zu dem XDM - Server hinzuzufügen.

10. Der Server, wie er in Anspruch 9 beansprucht wird, in dem der XCAP - PUT zum Modifizieren jeglicher XML - Dokumente identifiziert wird, die auf den XDM - Servern gespeichert sind, und in dem nach dem Modifizieren des Dokuments der SDM - Server eine Antwort an den XDM - Client zurück sendet.

11. Der Server, wie er in Anspruch 8 beansprucht wird, in dem die Einrichtung zum Empfangen einer Anfrage zum Weiterleiten von Kontaktlisteneinträgen von einem sendenden Nutzer eine Anforderung zum Weiterleiten von Gruppenlisteneinträgen und deren Attribute einschließlich der Aliasnamen und der Präsenzsubskription in die Kontaktliste des empfangenden Nutzers empfängt und die Präsenzsubskription durch den Nutzer an andere Nutzer ausführt.

12. Der Server, wie er in Anspruch 11 beansprucht wird, in dem die Einrichtung zum Hinzufügen der Kontaktliste / Gruppenlisteneinträge und deren Attribute einschließlich der Aliasnamen und der Präsenzsubskription in die Kontaktliste des empfangenden Nutzers die Präsenzsubskription anstelle der empfangenden Nutzers ausführt und eine Nachricht über ein Ergebnis derselben an den Nutzer sendet.

## Revendications

1. Procédé de retransmission d'un abonnement de présence conjointement avec des entrées de liste de contacts par un serveur, le procédé comprenant les étapes consistant à :
a) préétablir des identifiants d'autres utilisateurs sous forme d'une liste de valeurs préétablies par chaque utilisateur, pour lesquels un utilisateur récepteur est intéressé d'accepter au moins des pseudonymes et/ou des abonnements de présence des autres utilisateurs ;
b) recevoir une demande de retransmission d'entrées de liste de contacts provenant d'un utilisateur émetteur ; et
c) vérifier la liste de valeurs préétablies tout en effectuant une opération de retransmission ;
dans lequel, si l'identifiant de l'utilisateur émetteur se trouve dans la liste de valeurs préétablies, le serveur retransmet lesdites entrées de liste de contacts à l'utilisateur récepteur.

2. Procédé selon la revendication 1, dans lequel l'étape consistant à préétablir des identifiants des autres utilisateurs est effectuée en utilisant une gestion de document XML, et dans lequel le procédé comprend en outre l'étape consistant à envoyer une demande XCAP PUT provenant d'un utilisateur émetteur à un serveur XDM pour modifier un document XML de politique d'accès afin d'ajouter les identifiants d'autres utilisateurs à une liste d'accès au serveur XDM en utilisant un client XDM.

3. Procédé selon la revendication 2, dans lequel la demande XCAP PUT est identifiée pour modifier un document XML quelconque stocké dans les serveurs XDM et dans lequel le procédé comprend en outre l'étape consistant, lors de la modification du document, à renvoyer une réponse au client XDM par le serveur XDM.

4. Procédé selon la revendication 1, comprenant en outre l'étape consistant à retransmettre une liste de contacts/de groupes révisée, modifiée durant la retransmission, à d'autres utilisateurs par l'utilisateur émetteur.

5. Procédé selon la revendication 1, dans lequel l'étape de réception d'une demande pour retransmettre des entrées de liste de contacts comprend en outre l'étape consistant à recevoir une demande de retransmission d'entrées de liste de groupes d'un utilisateur, qui sont stockées soit dans le serveur, soit dans un client, conjointement avec leurs attributs, y compris les pseudonymes et l'abonnement de présence vers d'autres utilisateurs par l'utilisateur.

6. Procédé selon la revendication 5 dans lequel, si un identifiant de l'utilisateur émetteur se trouve dans la liste de valeurs préétablies, le serveur ajoute les entrées de liste de contacts/de groupes et leurs attributs, y compris les pseudonymes et l'abonnement de présence, dans la liste de contacts de l'utilisateur récepteur et met en oeuvre l'abonnement de présence au nom de l'utilisateur récepteur ; et envoie une notification d'un résultat correspondant à l'utilisateur.

7. Procédé selon la revendication 6, comprenant en outre l'étape qui consiste, lorsque le serveur ajoute les entrées de liste de contacts retransmises, à envoyer une demande pour permettre l'ajout des entrées aux utilisateurs correspondant aux entrées à ajouter, à recevoir une réponse correspondante et à ajouter les entrées.

8. Serveur de retransmission d'un abonnement de présence conjointement avec des entrées de liste de contacts, le serveur comprenant :
a) un moyen de réception d'une demande de retransmission des entrées de liste de contacts provenant d'un utilisateur émetteur ;
b) un moyen pour préétablir des identifiants d'autres utilisateurs sous forme d'une liste de valeurs préétablies par chaque utilisateur pour lequel un utilisateur récepteur est intéressé d'accepter au moins des pseudonymes ou des abonnements de présence des autres utilisateurs ; et
c) un moyen pour vérifier la liste de valeurs préétablies tout en effectuant une opération de retransmission ;
d) un moyen pour retransmettre lesdites entrées de liste de contacts à l'utilisateur récepteur si l'identifiant de l'utilisateur émetteur se trouve dans la liste de valeurs préétablies.

9. Serveur selon la revendication 8, dans lequel l'étape consistant à préétablir les identifiants des utilisateurs est effectuée en utilisant une gestion par document XML et dans lequel l'utilisateur envoie, à l'aide d'un client XDM, une demande XCAP PUT à un serveur XDM pour modifier un document XML de politique d'accès pour ajouter les identifiants d'autres utilisateurs à une liste d'accès au serveur XDM.

10. Serveur selon la revendication 9, dans lequel la demande XCAP PUT est identifiée pour modifier un document XML quelconque stocké dans les serveurs XDM et dans lequel, lors de la modification du document, le serveur XDM renvoie une réponse au client XDM.

11. Serveur selon la revendication 8, comprenant un moyen de réception d'une demande de retransmission des entrées de liste de contacts provenant d'un utilisateur émetteur que récepte une demande de retransmission d'entrées de liste de groupes et leurs attributs, y compris les pseudonymes et l'abonnement de présence, dans la liste de contacts de l'utilisateur récepteur et pour mettre en oeuvre l'abonnement de présence à d'autres utilisateurs par l'utilisateur.

12. Serveur selon la revendication 11, dans lequel le serveur comprend un moyen pour ajouter les entrées de liste de contacts/de groupes et leurs attributs, y compris les pseudonymes et l'abonnement de présence, dans la liste de contacts de l'utilisateur récepteur et met en oeuvre l'abonnement de présence au nom de l'utilisateur récepteur et envoie une notification pour un résultat correspondant à l'utilisateur.
